# EUROPEAN PATENT SPECIFICATION

(11) **EP 3 070 980 B1**
(45) Date of publication and mention of the grant of the patent: **02.01.2019**
(21) Application number: 13897554.5
(22) Date of filing: 15.11.2013
(51) Int. Cl.: H04W 52/02, H04W 52/24, H04W 52/36

(54) **POWER ADJUSTMENT METHOD AND APPARATUS**
PARAMETEREINSTELLUNGSVERFAHREN UND -VORRICHTUNG
PROCÉDÉ DE RÉGLAGE DE PUISSANCE ET APPAREIL

(43) Date of publication of application: 21.09.2016
(73) Proprietor: Huawei Technologies Co., Ltd., Longgang District Shenzhen, Guangdong 518129 (CN)
(72) Inventor: ZHENG, Xiaokun, Shenzhen Guangdong 518129 (CN); YANG, Xun, Shenzhen Guangdong 518129 (CN); JIANG, Ting, Shenzhen Guangdong 518129 (CN)
(74) Representative: Epping - Hermann - Fischer
(86) International application number: PCT/CN2013/087255
(87) International publication number: WO 2015/070443

(56) References cited:
- WO-A2-02/082751
- CN-A- 101 124 784
- CN-A- 102 754 493
- CN-A- 103 119 870
- US-A1- 2011 096 760
- OTERI OGHENEKOME ET AL: "Advanced power control techniques for interference mitigation in dense 802.11 networks", 2013 16TH INTERNATIONAL SYMPOSIUM ON WIRELESS PERSONAL MULTIMEDIA COMMUNICATIONS (WPMC), NICT, 24 June 2013 (2013-06-24), pages 1-7, XP032493927, ISSN: 1347-6890 [retrieved on 2013-10-02]

## Description

### TECHNICAL FIELD

The present invention relates to the field of communications technologies, and in particular, to a power adjustment method and apparatus.

### BACKGROUND

Multiple basic service sets (Basic Service Set, BSS) may exist in a single-frequency network in which a distributed coordination function (Distributed Coordination Function, DCF) contention access mechanism is used. Each BSS includes one access point (Access Point, AP) and multiple communication node devices, the communication node devices can request to access the AP only when obtaining by means of monitoring an idle carrier, and at one time, only one communication node device can access the AP to perform data transmission.

When a quantity of BSSs in the single-frequency network is relatively large, an overlap (Overlap) region exists between coverage areas of the BSSs. It is assumed that a BSS to which a communication node device in the overlap region belongs is this region, and another BSS constituting the overlap region is an adjacent region. Because the communication node device located in the overlap region is in a transmission coverage area of the adjacent region, a probability that the communication node device located in the overlap region obtains by means of monitoring an idle carrier is lower than a probability that other communication node devices in this region obtains by means of monitoring an idle carrier, and probabilities that the communication node device located in the overlap region accesses an AP in this region and performs data transmission are also lower than probabilities that the other communication node devices in this region accesses the AP in this region and performs data transmission, respectively.

Generally, when the communication node device located in the overlap region has a requirement of performing data transmission, an AP in the adjacent region may reduce data transmission power of communication node devices in the adjacent region, to reduce coverage of the communication node devices in the adjacent region for the overlap region; therefore, data transmission of the communication node device located in the overlap region is not effected, thereby raising the probability of access of the communication node device located in the overlap region to the AP in this region.

However, the data transmission power of the communication node devices in the adjacent region cannot be accurately reduced in the prior art. If the data transmission power of the communication node devices in the adjacent region is reduced excessively little, the probability of the access of the communication node device located in the overlap region to the AP in this region cannot be effectively raised; and if the data transmission power of the communication node devices in the adjacent region is reduced excessively much, a global throughput of the adjacent region is effected seriously.

In the article "Advanced Power Control Techniques for Interference Mitigation in Dense 802.11 Networks" by O. Oteri et al., an enhanced Transmit Power Control (TPC) scheme and a new fractional Carrier Sense Multiple Access with Collision A voidance (F-CSMA/CA) scheme for use in a dense 802.11 network is proposed. The new schemes improve the energy normalized Media Access Control Goodput performance in networks with overlapping Basic Service Sets (OBSSs) by mitigating the interference effect using TPC and reducing interference generated during neighboring BSS-edge transmission using inter-cell coordination. The scheme works seamlessly with a CSMA/CA multiple access technique, and is suitable for evolution of future WLAN systems such as IEEE 802.11ah, and High Efficiency WiFi (HEW). Numerical results demonstrate an increase in the normalized good put of up to 80% in downlink transmission and 100% in uplink transmission over existing schemes.

### SUMMARY

### Technical problem

In view of this, the technical problem to be solved in the present invention is how to accurately adjust data transmission power of communication node devices in an adjacent region.

### Technical Solution

In order to resolve the technical problem described above, according to a first aspect, the present invention provides a power adjustment apparatus, including:
a monitoring module, configured to monitor a first beacon frame in a monitoring period;
a processing module, connected to the monitoring module and configured to: when the monitoring module obtains by means of monitoring the first beacon frame in the monitoring period, determine, according to a received signal strength indicator RSSI and a data field in the first beacon frame, whether a first node device is located in an overlap region between a first basic service set and a second basic service set, where the first node device is a node device that is in the first basic service set and accesses a first access point; and
a determining module, connected to the processing module and configured to: in a case in which the processing module determines that the first node device is located in the overlap region, determine an upper limit of data transmission power between a second node device and the power adjustment apparatus according to the RSSI, where the second node device is a node device that is in the second basic service set and accesses the power adjustment apparatus;
wherein the determining module is connected to the monitoring module, and is configured to determine, according to a network allocation vector NAV in a duration field in the first beacon frame, a time instant when a next monitoring period starts.

With reference to the first aspect, in a first possible implementation manner, the first beacon frame is a frame in a Request to Send/Clear to Send RTS/CTS protocol format, and the processing module is specifically configured to:
determine, according to the data field, whether the first beacon frame comes from the first node device; and
in a case in which the first beacon frame comes from the first node device, determine, according to the RSSI, whether the first node device is located in the overlap region.

With reference to the first aspect, in a third possible implementation manner, the processing module is further configured to: if the monitoring module does not obtain by means of monitoring the first beacon frame in a previous monitoring period, initiate long monitoring for the first beacon frame after a set time period, and broadcast to each of node devices in the second basic service set that the long monitoring is initiated, to instruct each of the node devices in the second basic service set to suspend requesting to access the power adjustment apparatus of the second basic service set within a time range of the long monitoring.

With reference to the first aspect or any one implementation manner of the first possible implementation manner to the third possible implementation manner of the first aspect, in a fourth possible implementation manner, the processing module is further configured to: in a case in which the monitoring module obtains by means of monitoring that an access saturated degree of the first access point is less than a first threshold, stop monitoring the first beacon frame, and instruct the first access point to reduce a backoff time of a node device, located in the overlap region, in the first basic service set, where the access saturated degree is determined according to a ratio of a time for processing a service by the first access point to a first set time.

With reference to the first aspect or any one implementation manner of the first possible implementation manner to the fourth possible implementation manner of the first aspect, in a fifth possible implementation manner, the processing module is further configured to: if a third node device located in the overlap region exists in the second basic service set and needs to raise a probability of accessing the power adjustment apparatus of the second basic service set, extend a broadcasting scope for sending a second beacon frame, to enable the first access point to monitor a second beacon frame sent by the power adjustment apparatus of the second basic service set, so that the first access point enters into a monitoring period thereof according to the second beacon frame sent by the power adjustment apparatus of the second basic service set, to monitor a second beacon frame sent by the third node device, and determines an upper limit of data transmission power between the first node device and the first access point, where
the second beacon frame is a frame in the RTS/CTS protocol format.

According to a second aspect, the present invention provides a power adjustment method, including:
when a second access point of a second basic service set obtains by means of monitoring a first beacon frame in a monitoring period, determining, by the second access point, according to a received signal strength indicator RSSI and a data field in the first beacon frame, whether a first node device is located in an overlap region between a first basic service set and the second basic service set, where the first node device is a node device that is in the first basic service set and accesses a first access point; and
in a case in which the first node device is located in the overlap region, determining, by the second access point, an upper limit of data transmission power between a second node device and the second access point according to the RSSI, where the second node device is a node device that is in the second basic service set and accesses the second access point;
wherein after the second access point in the second basic service set obtains by means of monitoring the first beacon frame in the monitoring period, the method further comprises:
   determining, by the second access point, according to a network allocation vector NAV in a duration filed in the first beacon frame, a time instant when a next monitoring period starts.

With reference to the second aspect, in a first possible implementation manner, the first beacon frame is a frame in a Request to Send/Clear to Send RTS/CTS protocol format, and the determining, by the second access point, according to a received signal strength indicator RSSI and a data field in the first beacon frame, whether a first node device is located in an overlap region between a first basic service set and the second basic service set includes:
determining, by the second access point, according to the data field, whether the first beacon frame comes from the first node device; and
in a case in which the first beacon frame comes from the first node device, determining, by the second access point, according to the RSSI, whether the first node device is located in the overlap region.

With reference to the second aspect, in a third possible implementation manner, if the second access point does not obtain by means of monitoring the first beacon frame in a previous monitoring period, the method further includes:
initiating, by the second access point, long monitoring for the first beacon frame after a set time period, and broadcasting to each of node devices in the second basic service set that the long monitoring is initiated, to instruct each of the node devices in the second basic service set to suspend requesting to access the second access point within a time range of the long monitoring.

With reference to the second aspect or any one implementation manner of the first possible implementation manner to the third possible implementation manner of the second aspect, in a fourth possible implementation manner, the method further includes:
in a case in which the second access point obtains by means of monitoring that an access saturated degree of the first access point is less than a first threshold, stopping, by the second access point, monitoring the first beacon frame, and instructing the first access point to reduce a backoff time of a node device, located in the overlap region, in the first basic service set, where the access saturated degree is determined according to a ratio of a time for processing a service by the first access point to a first set time.

With reference to the second aspect or any one implementation manner of the first possible implementation manner to the fourth possible implementation manner of the second aspect, in a fifth possible implementation manner, the method further includes:
if a third node device located in the overlap region exists in the second basic service set and needs to raise a probability of accessing the second access point, extending, by the second access point, a broadcasting scope for sending a second beacon frame, to enable the first access point to monitor a second beacon frame sent by the second access point, so that the first access point enters into a monitoring period thereof according to the second beacon frame sent by the second access point, to monitor a second beacon frame sent by the third node device, and determines an upper limit of data transmission power between the first node device and the first access point, where
the second beacon frame is a frame in the RTS/CTS protocol format.

### Beneficial Effect

In the power adjustment method of the present invention, whether a first node device is located in an overlap region between a first basic service set and a second basic service set is determined according to a data field and an RSSI in a first beacon frame, and if the first node device is located in the overlap region, data transmission power between a second node device and a second access point is determined according to the RSSI, and data transmission power of the second node device is adjusted correspondingly; therefore, the second basic service set may not interfere with access of the first node device located in the overlap region to a first access point and data transmission, and a concurrent transmission probability of the first basic service set and the second basic service set is raised.

According to exemplary embodiments described in detail below with reference to the accompanying drawings, other features and aspects of the present invention become clear.

### BRIEF DESCRIPTION OF THE DRAWINGS

The accompanying drawings included in the specification and constituting a part of the specification along with the specification show exemplary embodiments, features and aspects of the present invention, and are used to explain the principle of the present invention.
FIG. la is a flowchart of a power adjustment method according to Embodiment 1 of the present invention;
FIG. 1b is a schematic network diagram of an overlap region between a first basic service set and a second basic service set;
FIG. 2a is a flowchart of a power adjustment method according to Embodiment 2 of the present invention;
FIG. 2b is a schematic diagram in which power is adjusted by the second basic service set when a node device located in the overlap region exists in the first basic service set;
FIG. 2c is a schematic diagram in which a first basic service set and a second basic service set monitor each other;
FIG. 3 is a structural block diagram of a power adjustment apparatus according to Embodiment 3 of the present invention;
FIG. 4 is a structural block diagram of a power adjustment apparatus according to Embodiment 4 of the present invention; and
FIG. 5 is a structural block diagram of a power adjustment apparatus according to an example.

### DESCRIPTION OF EMBODIMENTS

Various exemplary embodiments, features and aspects of the present invention are described in detail below with reference to the accompanying drawings. The same reference numerals in the accompanying drawings represent elements having the same or similar function. Although various aspects of the embodiments are shown in the accompanying drawings, the accompanying drawings are not necessarily drawn to scale unless noted otherwise.

The special word "exemplary" here refers to "be used for an example, an embodiment or illustration". Any embodiment described as "exemplary" is not necessarily explained to be superior to or better than other embodiments.

In addition, in order to better describe the present invention, many specific details are given in the specific implementation manners hereinafter. It should be understood by a person skilled in the art that the present invention may also be implemented without some specific details. In some other embodiments, a method, means, an element and a circuit well-known by a person skilled in the art are not described in detail, so as to underline a main idea of the present invention.

### Embodiment 1

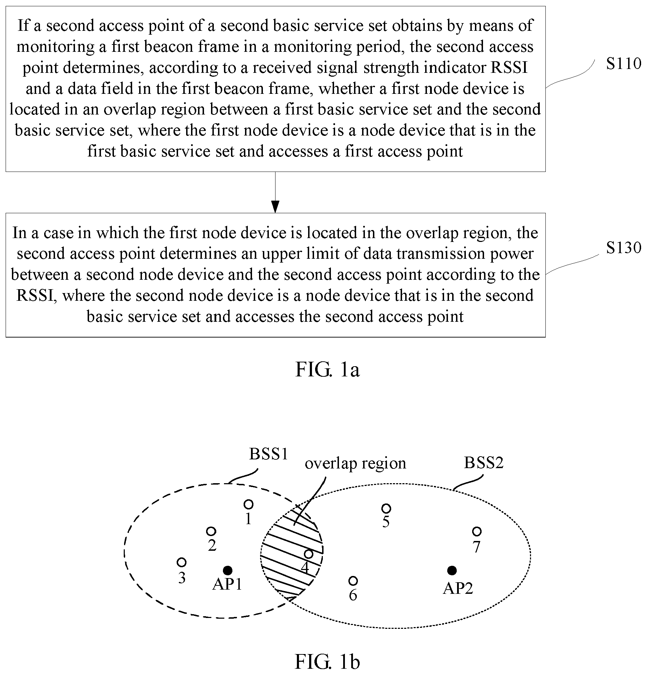

FIG. 1a is a flowchart of a power adjustment method according to Embodiment 1 of the present invention. As shown in FIG. 1a, the power adjustment method mainly includes:
Step S110: If a second access point of a second basic service set obtains by means of monitoring a first beacon frame in a monitoring period, the second access point determines, according to a received signal strength indicator RSSI and a data field in the first beacon frame, whether a first node device is located in an overlap region between a first basic service set and the second basic service set, where the first node device is a node device that is in the first basic service set and accesses a first access point.

A single-frequency network may include multiple basic service sets (BSS), each BSS may include one access point (AP) such as a base station, and multiple node devices, such as a cell phone, a tablet computer, a vehicle-mounted mobile apparatus, accessing the AP. The node devices can send a beacon frame to the AP when obtaining by means of monitoring an idle carrier, to request to access the AP to perform data transmission, and at one time, only one node device can access the AP to perform data transmission. The first basic service set includes the first access point, and a node device that is in the first basic service set and accesses the first access point is the first node device. The second basic service set includes the second access point and multiple node devices that access the second access point. An overlap region exists between the first basic service set and the second basic service set. FIG. 1b is a schematic network diagram of the overlap region between the first basic service set and the second basic service set. As shown in FIG. 1b, BSS1 is the first basic service set, AP1 is the first access point, node devices 1 to 4 are the first node devices, BSS2 is the second basic service set, AP2 is the second access point, and node devices 5 to 7 are node devices of the BSS2, a shaded region in the figure is the overlap region between the BSS1 and the BSS2, and the node device 4 is located in the overlap region.

Specifically, the second basic service set may have a monitoring period, a transmission period and a contention access period. A time period during which the second access point performs data transmission with the node devices in the second basic service set is the transmission period. A time period during which the node devices in the second basic service set request to access the second access point in a case of detecting that the second access point is idle is the contention access period. A time period during which the second access point suspends data transmission and monitors the first beacon frame broadcast by the first basic service set is the monitoring period. Generally, the monitoring period is included in the transmission period. When the second access point detects that the first basic service set is ready to broadcast the first beacon frame, the second access point may trigger the monitoring period thereof, to suspend data transmission being performed currently and start to monitor the first beacon frame broadcast by the first basic service set.

In a possible implementation manner, the first beacon frame is a frame in a Request to Send/Clear to Send (Request to Send/Clear to Send RTS/CTS) protocol format, and that the second access point determines, according to a received signal strength indicator RSSI and a data field in the first beacon frame, whether the first node device is located in an overlap region between a first basic service set and the second basic service set includes:
determining, by the second access point, according to the data field, whether the first beacon frame comes from the first node device; and
in a case in which the first beacon frame comes from the first node device, determining, by the second access point, according to the RSSI, whether the first node device is located in the overlap region.

Specifically, not only the first access point in the first basic service set can broadcast the first beacon frame, but also the first node device in the first basic service set can broadcast the first beacon frame. The first beacon frame is a frame in a Request to Send/Clear to Send RTS/CTS protocol format, and the first beacon frame includes a data field and a received signal strength indicator RSSI. The data field may indicate whether the first beacon frame comes from the first access point or the first node device, and the RSSI may indicate received signal strength. Therefore, the second access point may determine, according to the data field, whether the first beacon frame is broadcast by the first node device. If the second access point determines that the first beacon frame is broadcast by the first node device, the second access point may determine a distance between the first node device and the second access point according to the RSSI. If the RSSI is stronger, the first node device is closer to the second access point; and if the RSSI is lower, the first node device is farther from the second access point. If the RSSI is greater than or equal to a set threshold, the second access point may determine that the first node device is located in the overlap region.

For example, referring to FIG. 1b, it is assumed that the node device 4 broadcasts the first beacon frame, and in the first beacon frame, the data field is "2", the RSSI is "50", and the set threshold is "44". If the AP2 detects the first beacon frame and that the data field is "2", the AP2 may determine that the first beacon frame comes from the node device 4. If the AP2 detects the first beacon frame and that the RSSI is "50" greater than "44", the AP2 may determine that the node device 4 is located in the overlap region between the BSS1 and the BSS2, which is similar to an actual case.

In a possible implementation manner, after the second access point in the second basic service set obtains by means of monitoring the first beacon frame in the monitoring period, the method further includes:
determining, by the second access point, according to a network allocation vector (Net Allocation Vector, NAV) of a duration field in the first beacon frame, a time instant when a next monitoring period of the second access point starts.

Specifically, the first beacon frame further includes a duration (duration) field, and the duration field includes a network allocation vector. The second access point may calculate a wait time according to the NAV, that is, the second access point may determine a time of receiving a first beacon frame next time, i.e. a time instant when a next monitoring period of the second access point starts; therefore, the second access point monitors the first beacon frame continually. After receiving the NAV in the monitoring period and determining the time instant when the next monitoring period starts, the second access point may broadcast, in the second basic service set, the time instant when the next monitoring period starts, so that all node devices in the second basic service set may perform avoidance in the next monitoring period to not interfere with monitoring the first beacon frame by the second access point. Even if the next monitoring period occurs in a non-data transmission period, it can ensured that the second access point monitors the first beacon frame of the first basic service set effectively.

Step S130: In a case in which the first node device is located in the overlap region, the second access point determines an upper limit of data transmission power between a second node device and the second access point according to the RSSI, where the second node device is a node device that is in the second basic service set and accesses the second access point.

Specifically, each time after the second access point monitors the first beacon frame, the second access point may determine whether data transmission suspended in the monitoring period is uplink transmission or downlink transmission. Specifically, the uplink transmission refers to that the second node device sends data to the second access point, and the downlink transmission refers to that the second access point sends data to the second node device. The second access point determines, according to a monitoring result in the monitoring period, data transmission power of the data transmission suspended in the monitoring period, which includes two cases as follows:
Case 1: If the data transmission suspended in the monitoring period is the downlink transmission, the second access point may select the data transmission power according to the monitoring result.

Specifically, in a case in which the second access point determines that the first node device is located in the overlap region, the second access point may reduce the data transmission power of the data transmission suspended in the monitoring period to a power that exactly does not interfere with access of the node device, located in the overlap region, in the first basic service set to the first access point and data transmission. If the data transmission power is reduced excessively little, the access of the node device, located in the overlap region, in the first basic service set to the first access point and the data transmission are interfered; and if the data transmission power is reduced excessively much, although the access of the node device, located in the overlap region, in the first basic service set to the first access point and the data transmission are not interfered, data transmission power of the second basic service set is reduced excessively much, a data transmission rate is reduced excessively much correspondingly, and a concurrent transmission probability of the first basic service set and the second basic service set is reduced. The concurrent transmission probability refers to a probability of performing data transmission by the first basic service set and the second basic service set simultaneously. Therefore, compared with a general method for blindly adjusting the data transmission power, the second access point according to this embodiment of the present invention adjusts the data transmission power, which balances not interfering with the node device, located in the overlap region, in the first basic service set and the concurrent transmission probability on the basis of exactly not interfering with the access of the node device, located in the overlap region, in the first basic service set to the first access point and the data transmission. That is, on the premise of not interfering with the access of the node device, located in the overlap region, in the first basic service set to the first access point and the data transmission, the data transmission power is kept as high as possible. Correspondingly, in a case in which the second access point determines that the first node device is located in a non-overlap region, the second access point may not adjust the data transmission power of the data transmission suspended in the monitoring period, or the second access point may properly increase the data transmission power of the data transmission suspended in the monitoring period without interfering with the first basic service set.

Case 2: If the data transmission suspended in the monitoring period is the uplink transmission, the second node device may select the data transmission power according to the monitoring result.

Specifically, after the monitoring period ends, the second access point may broadcast, in the second basic service set, the monitoring result and a remaining time length of a transmission period for the data transmission suspended in the monitoring period, to feed back the monitoring result to the second node device. The second node device may adjust data transmission power thereof in time according to the monitoring result of the second access point and the remaining time length of the transmission period for the data transmission suspended in the monitoring period. In a case in which the second access point determines that the first node device is located in the overlap region, the second node device may reduce the data transmission power thereof to a power that exactly does not interfere with access of the node device, located in the overlap region, in the first basic service set to the first access point and data transmission. If the data transmission power is reduced excessively little, the node device, located in the overlap region, in the first basic service set is interfered; and if the data transmission power is reduced excessively much, although the node device, located in the overlap region, in the first basic service set is not interfered, the data transmission power of the second node device is reduced excessively much, data transmission power of the second basic service set is reduced excessively much, a data transmission rate of the second basic service set is reduced excessively much correspondingly, and a concurrent transmission probability of the first basic service set and the second basic service set is reduced. Compared with a general method for blindly adjusting the data transmission power, the second access point according to this embodiment of the present invention adjusts the data transmission power thereof, which balances not interfering with the node device, located in the overlap region, in the first basic service set and the concurrent transmission probability on the basis of exactly not interfering with the node device, located in the overlap region, in the first basic service set. That is, on the premise of not interfering with the access of the node device, located in the overlap region, in the first basic service set to the first access point and the data transmission, the data transmission power of the second node device is kept as high as possible. In a case in which the second access point determines that the first node device is located in a non-overlap region, the second node device may not adjust the data transmission power thereof, or the second node device may properly increase the data transmission power thereof without interfering with the first basic service set.

Further, after the data transmission power between the second node device and the second access point is determined, a data transmission rate between the second node device and the second access point may further be determined. Received signal strength may be obtained according to power attenuation of the second node device, and the data transmission rate between the second node device and the second access point is further determined with reference a comparison table between data transmission power in a network system according to the 802.11a standard and a data transmission rate supported by the data transmission power, as shown in Table 1 below.

**Table 1 Data Transmission Power in Network System according to the 802.11a Standard and Data Transmission Rate supported**

| | | | |
|---|---|---|---|
| 6M -82dbm | 9M -81dbm | 12M -79dbm | 18M -77dbm |
| 24M -74dbm | 36M -70dbm | 48M -66dbm | 54M -65dbm |

For example, in order to ensure that the second basic service set does not interfere with the first node device in the overlap region, the data transmission power between the second node device and the second access point is adjusted, so that the data transmission rate between the second node device and the second access point cannot reach a rate of 6 megabits per second (Mbps), the second node device is far from the second access point, the adjusted data transmission power between the second node device and the second access point is less than -82 decibel milliwatt (dbm), and data transmission in the second basic service set is suspended.

It should be noted that, although the power adjustment method according to this embodiment of the present invention is introduced by using the single-frequency network as an example, it can be understood by a person skilled in the art that the present invention is not limited thereto. In fact, the present invention is also applicable to power adjustment for a wireless local area network WLAN such as a multi-frequency network.

In the power adjustment method according to this embodiment of the present invention, whether a first node device is located in an overlap region between a first basic service set and a second basic service set is determined according to a data field and an RSSI in a first beacon frame, and if the first node device is located in the overlap region, data transmission power between a second node device and a second access point is determined according to the RSSI, and data transmission power of the second node device is adjusted correspondingly; therefore, the second basic service set may not interfere with access of the first node device located in the overlap region to a first access point and data transmission, thereby improving a concurrent transmission probability of the first basic service set and the second basic service set.

### Embodiment 2

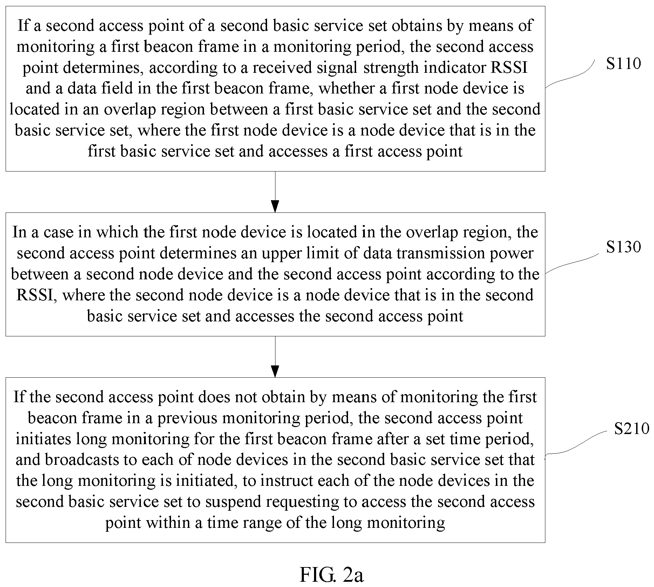

FIG. 2a is a flowchart of a power adjustment method according to Embodiment 2 of the present invention. A step in FIG. 2a having a same sequence number as a step in Figure 1a has a same function as the step in FIG. 1a. For simplicity, detailed descriptions for these steps are omitted.

As shown in FIG. 2a, the power adjustment method shown in FIG. 2a is different from the power adjustment method shown in FIG. 1a in that, in addition to step S110 and step S130, the power adjustment method shown in FIG. 2a may further include:
Step S210: If the second access point does not obtain by means of monitoring the first beacon frame in a previous monitoring period, the second access point initiates long monitoring for the first beacon frame after a set time period, and broadcasts to each of node devices in the second basic service set that the long monitoring is initiated, to instruct each of the node devices in the second basic service set to suspend requesting to access the second access point within a time range of the long monitoring.

Specifically, the second access point may suspend data transmission and monitor the first beacon frame broadcast by the first basic service set in the monitoring period. If the second access point does not obtain by means of monitoring the first beacon frame broadcast by the first basic service set in the previous monitoring period, and therefore cannot determine when to enter into a next monitoring period, in this case, the second access point may initiate the long monitoring after a preset time interval T, to actively monitor the first beacon frame broadcast by the first basic service set, and then the second access point enters into a transmission period and a monitoring period again; a cycle as above is performed constantly.

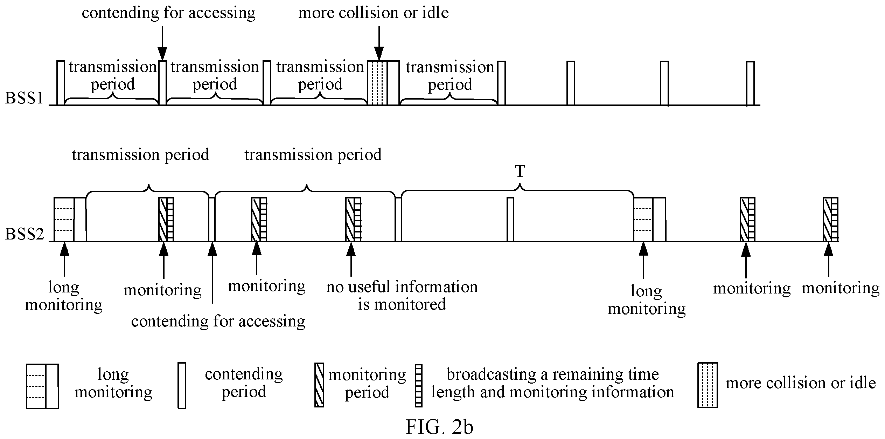

For example, FIG. 2b is a schematic diagram in which power is adjusted by the second basic service set when a node device located in the overlap region exists in the first basic service set. As shown in FIG. 2b, the BSS1 has a transmission period and a contention access period, and the BSS2 has a long monitoring period, a transmission period, a monitoring period and a contention access period. For the transmission period and the contention access period, reference may be made to the related description of step 110 in Embodiment 1 described above. An access point of the BSS2 may monitor whether the BSS1 broadcasts a first beacon frame in real time. In a case in which it is obtained by means of monitoring that the BSS1 is broadcasting the first beacon frame, the access point of the BSS2 may trigger the monitoring period thereof to suspend data transmission being performed currently and start to monitor the first beacon frame broadcast by the BSS1. In the monitoring period, an access point of the BSS2 may obtain by means of monitoring the first beacon frame or may not obtain by means of monitoring the first beacon frame. In a case in which the access point of the BSS2 obtains by means of monitoring the first beacon frame, data transmission power between a node device of the BSS2 and the access point of the BSS2 may be adjusted according to the related descriptions of step S110 and step S130 in Embodiment 1 described above. In a case in which the access point of the BSS2 does not obtain by means of monitoring the first beacon frame, the data transmission power between the node device of the BSS2 and the access point of the BSS2 may not be adjusted, and the BSS2 waits for a next transmission period and a next monitoring period. If the access point of the BSS2 does not obtain by means of monitoring the first beacon frame in a previous monitoring period, the access point of the BSS2 may broadcast, in the BSS2 after a time interval of 10 seconds (seconds), that the long monitoring is initiated, the node device of the BSS2 suspends, in the long monitoring period, requesting to access the access point of the BSS2, and does not interfere with the long monitoring of the access point of the BSS2.

In a possible implementation manner, the power adjustment method may further include: in a case in which the second access point obtains by means of monitoring that an access saturated degree of the first access point is less than a first threshold, the second access point stops monitoring the first beacon frame, and instructs the first access point to reduce a backoff time of a node device, located in the overlap region, in the first basic service set, where the access saturated degree is determined according to a ratio of a time for processing a service by the first access point to a first set time. The backoff time is a time interval from a time instant when an access request sent by a node device in the first basic service set when it is detected that the first access point is idle comes into collision with access requests sent by other node devices in the first basic service set to a time instant the access request is sent again by the node device in the first basic service set.

For example, it is assumed that the first basic service set includes a first access point, a node device 1, a node device 2, a node device 3 and a node device 4, the node device 4 is located in the overlap region, the second basic service set includes a second access point, the second access point obtains by means of monitoring that the access saturated degree of the first access point is less than the first threshold. Then, the second access point suspends monitoring the first beacon frame, and instructs the first access point to reduce a backoff time of the node device 4. That is, a time interval, from a time instant when an access request sent by the node device 4 to the first access point when it is detected that the first access point is idle comes into collision with access requests sent by the node device 1, the node device 2 and the node device 3 to the first access point to a time instant when the node device 4 sends the access request to the first access point again, is reduced.

Specifically, when the second access point obtains by means of monitoring that the access saturated degree of the first access point is less than the first threshold, an effective monitoring shrink efficiency of the second access point is low, and an influence of extending, by the first basic service set, a broadcasting scope for the first beacon frame on the second access point is large; and when the second access point obtains by means of monitoring that the access saturated degree of the first access point is greater than or equal to the first threshold, the effective monitoring shrink efficiency of the second access point is high, and the influence of extending, by the first basic service set, the broadcasting scope for the first beacon frame on the second access point is small. Therefore, in a case in which the second access point obtains by means of monitoring that the access saturated degree of the first access point is greater than or equal to the first threshold or a quantity of node devices in the overlap region is relatively large, the power adjustment method described in Embodiment 1 of the present invention is employed; and in a case in which the second access point obtains by means of monitoring that the access saturated degree of the first access point is less than the first threshold or the quantity of the node devices in the overlap region is relatively small, the power adjustment method described in Embodiment 1 is stopped, and the second access point may instruct the first access point to reduce the backoff time of the first node device located in the overlap region; therefore, a priority of the first node device located in the overlap region is further raised, to improve a probability of access of the first node device located in the overlap region to the first access point.

Further, the second access point may instruct the first access point to adjust the backoff time of the first node device located in the overlap region, so that the backoff time of the first node device located in the overlap region is less than backoff times of the other node devices in the first basic service set, or the backoff time of the first node device located in the overlap region is less than an average value of backoff times of all node devices in the first basic service set. After previous data transmission of the first access point ends, it is assumed that that the overlap region is not covered by the second basic service set, an access probability that the first node device located in the overlap region has a chance to contend for accessing the first access point is raised; correspondingly, it is assumed that the overlap region is covered by the second basic service set, the first node device located in the overlap region does not have a chance to contend for accessing the first access point, a node device, located in the non-overlap region, in the first basic service set, waits for a chance to contend for accessing the first access point.

In a possible implementation manner, the power adjustment method may further include: if a third node device located in the overlap region exists in the second basic service set and needs to raise a probability of accessing the second access point, the second access point extends a broadcasting scope for sending a second beacon frame, to enable the first access point to monitor a second beacon frame sent by the second access point, so that the first access point enters into a monitoring period thereof according to the second beacon frame sent by the second access point, to monitor a second beacon frame sent by the third node device, and determines an upper limit of data transmission power between the first node device and the first access point, where the second beacon frame is a frame in the RTC/CTS protocol format.

Specifically, when both the first basic service set and the second basic service set have node devices located in the overlap region, the first basic service set and the second basic service set need to monitor each other. If the first basic service set has more node devices in the overlap region and the second basic service set has less node devices in the overlap region, monitoring power control by the second basic service set may be power control performed according to the power adjustment method described in step S110 and step S130 in Embodiment 1 described above or according to the power adjustment method described in step S210, FIG. 2a and FIG. 2b in this embodiment. However, because a few of node devices located in the overlap region exist in the second basic service set, in addition to that the power control is performed according to the power adjustment method described in step S110 and step S130 or according to the power adjustment method described in step S210 and FIG. 2a and FIG. 2b, the second access point also needs to extend a broadcasting scope for sending the second beacon frame, to enable the first access point to monitor the second beacon frame sent by the second access point conveniently, so that the first access point determines, according to the second beacon frame sent by the second access point, a time instant when a monitoring period thereof starts.

The first access point enters into the monitoring period thereof to monitor the second beacon frame, and if the first access point obtains by means of monitoring the second beacon frame in the monitoring period thereof, the first access point determines, according to a data field in the second beacon frame obtained by means of monitoring, whether the second beacon frame comes from the third node device. In a case in which the second beacon frame comes from the third node device, the first access point determines, according to a received signal strength indicator RSSI in the second beacon frame, whether the third node device is located in the overlap region. In a case in which the third node device is located in the overlap region, the first access point determines an upper limit of data transmission power between the first node device and the first access point according to the RSSI.

Further, if the first access point obtains by means of monitoring the second beacon frame in the monitoring period thereof, the first access point may determine, according to a network allocation vector NAV in a duration field in the second beacon frame, a time instant when a next monitoring period thereof starts.

Further, if the first access point does not obtain by means of monitoring the second beacon frame in a previous monitoring period, the first access point initiates long monitoring for the second beacon frame after a set time period, and broadcasts to each of node devices in the first basic service set that the long monitoring is initiated, to instruct each of the node devices in the first basic service set to suspend requesting to access the first access point within a time range of the long monitoring.

Further, in a case in which the first access point obtains by means of monitoring that an access saturated degree of the second access point is less than a second threshold, the first access point may stop monitoring the second beacon frame, and instruct the second access point to reduce a backoff time of a node device, located in the overlap region, in the second basic service set.

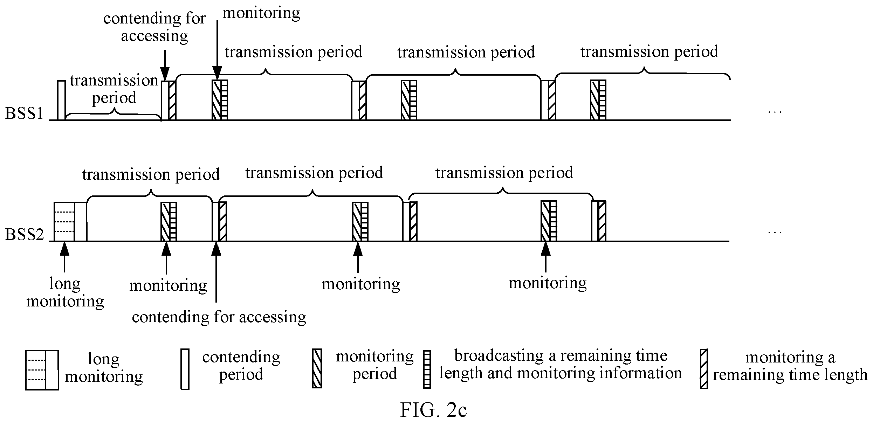

For example, FIG. 2c is a schematic diagram in which the first basic service set and the second basic service set monitor each other. As shown in FIG. 2c, after monitoring the first beacon frame, the second access point broadcasts a remaining time length to the second basic service set, and the first access point monitors the second beacon frame. That is, each time after contending for accessing, the first access point monitors feedback information of the second basic service set firstly, and then performs data transmission, where the feedback information is the second beacon frame. Also, the first access point knows when to suspend monitoring accessing the second basic service set in the transmission period and performs power adjustment. With regarding to a bad case in which multiple node devices located in the overlap region exist both in the first basic service set and in the second basic service set, it is suggested that a distance between the first basic service set and the second basic service set is increased, and the area of the overlap region between the first basic service set and the second basic service set is reduced.

In the power adjustment method according to this embodiment of the present invention, if it is obtained by means of monitoring that a first node device is located in an overlap region, data transmission power between a second node device and a second access point is determined according to an RSSI, and data transmission power of the second node device is adjusted correspondingly; a second basic service set may not interfere with access of the first node device located in the overlap region to a first access point and data transmission, thereby raising a concurrent transmission probability of a first basic service set and the second basic service set. If it is obtained by means of monitoring that an access saturated degree of the first access point is less than a first threshold, the first access point is instructed to reduce a backoff time of the first node device located in the overlap region, thereby improving a probability of the access of the first node device located in the overlap region to the first access point. If a node device located in the overlap region exists in the second basic service set and needs to raise the probability of accessing the second access point, a broadcasting scope for sending a second beacon frame is extended, and the first basic service set and the second basic service set monitor each other, thereby more accurately adjusting the data transmission power of the second node device, and raising the concurrent transmission probability of the first basic service set and the second basic service set.

### Embodiment 3

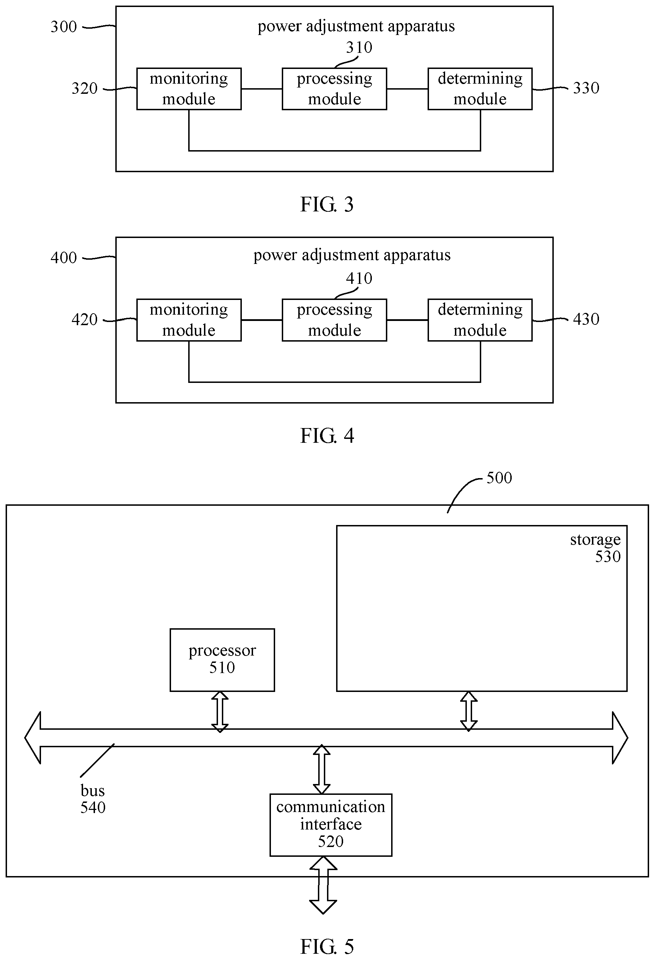

FIG. 3 is a structural block diagram of a power adjustment apparatus according to Embodiment 3 of the present invention. The power adjustment apparatus 300 according to this embodiment is configured to implement the power adjustment method according to Embodiment 1 shown in FIG. 1a. As shown in FIG. 3, the power adjustment apparatus 300 mainly includes a monitoring module 320, a processing module 310 and a determining module 330.

The monitoring module 320 is configured to monitor a first beacon frame in a monitoring period.

The processing module 310 is connected to the monitoring module 320, and is configured to: if the monitoring module 320 obtains by means of monitoring the first beacon frame in the monitoring period, determine, according to a received signal strength indicator RSSI and a data field in the first beacon frame, whether a first node device is located in an overlap region between a first basic service set and a second basic service set, where the first node device is a node device that is in the first basic service set and accesses a first access point.

The power adjustment apparatus 300 may be an access point (AP) such as a base station. A single-frequency network may include multiple basic service sets (BSS), each BSS may include one access point (AP) and multiple node devices, such as a cell phone, a tablet computer and a vehicle-mounted mobile apparatus, accessing the AP. The node devices can send a beacon frame to the AP when obtaining by means of monitoring an idle carrier, to request to access the AP to perform data transmission, and at one time, only one node device can access the AP to perform data transmission. The first basic service set includes the first access point, and a node device that is in the first basic service set and accesses the first access point is the first node device. The second basic service set includes the power adjustment apparatus 300 and multiple node devices that access the power adjustment apparatus 300. An overlap region exists between the first basic service set and the second basic service set. For a specific example, reference may be made to the related description in step S110 in Embodiment 1 described above.

Specifically, the second basic service set may have a monitoring period, a transmission period and a contention access period. A time period during which the power adjustment apparatus 300 performs data transmission with the node devices in the second basic service set is the transmission period. A time period during which the node devices in the second basic service set request to access the power adjustment apparatus 300 in a case of detecting that the power adjustment apparatus 300 is idle is the contention access period. A time period during which the power adjustment apparatus 300 suspends data transmission and monitors the first beacon frame broadcast by the first basic service set is the monitoring period. Generally, the monitoring period is included in the transmission period. When the monitoring module 320 obtains by means of monitoring that the first basic service set is ready to broadcast the first beacon frame, the power adjustment apparatus 300 may trigger the monitoring period thereof, to suspend data transmission being performed currently, and the monitoring module 320 starts to monitor the first beacon frame broadcast by the first basic service set.

In a possible implementation manner, the first beacon frame is a frame in a Request to Send/Clear to Send RTS/CTS protocol format, and the processing module 310 is specifically configured to:
determine, according to the data field, whether the first beacon frame comes from the first node device; and
in a case in which the first beacon frame comes from the first node device, determine, according to the RSSI, whether the first node device is located in the overlap region.

Specifically, not only the first access point in the first basic service set can broadcast the first beacon frame, but also the first node device in the first basic service set can broadcast the first beacon frame. The first beacon frame is a frame in the Request to Send/Clear to Send RTS/CTS protocol format, and the first beacon frame includes a data field and a received signal strength indicator RSSI. The data field may indicate whether the first beacon frame comes from the first access point or the first node device, and the RSSI may indicate received signal strength. Therefore, the processing module 310 may determine, according to the data field, whether the first beacon frame is broadcast by the first node device. In a case in which the processing module 310 determines that the first beacon frame is broadcast by the first node device, and the processing module 310 may determine a distance between the first node device and the power adjustment apparatus 300 according to the RSSI. If the RSSI is stronger, the first node device is closer to the power adjustment apparatus 300; and if the RSSI is lower, the first node device is farther from the power adjustment apparatus 300. If the RSSI is greater than or equal to a set threshold, the processing module 300 may determine that the first node device is located in the overlap region.

For example, referring to FIG. 1b, it is assumed that the node device 4 broadcasts the first beacon frame, and in the first beacon frame, the data field is "2", the RSSI is "0", and the set threshold is "44". If the monitoring module 320 of the AP2 obtains by means of monitoring the first beacon frame and that the data field is "2", the processing module 310 may determine that the first beacon frame comes from the node device 4. If the processing module 310 may detect the first beacon frame and that the RSSI is "50" greater than "44", the processing module 310 may determine that the node device 4 is located in the overlap region between the BSS1 and the BSS2, which is similar to an actual case.

The determining module 330 is connected to the processing module 310, and is configured to: in a case in which the processing module 310 determines that the first node device is located in the overlap region, determine an upper limit of data transmission power between a second node device and the power adjustment apparatus 300 according to the RSSI, where the second node device is a node device that is in the second basic service set and accesses the power adjustment apparatus 300.

Specifically, each time after the monitoring module 320 monitors the first beacon frame, the processing module 310 may determine whether data transmission suspended in the monitoring period is uplink transmission or downlink transmission. Specifically, the uplink transmission refers to that the second node device sends data to the power adjustment apparatus 300, and the downlink transmission refers to that the power adjustment apparatus 300 sends data to the second node device. The determining module 330 determines, according to a monitoring result of the monitoring module 320 in the monitoring period, data transmission power of the data transmission suspended in the monitoring period, which includes two cases as follows:
Case 1: If the data transmission suspended in the monitoring period belongs to the downlink transmission, the determining module 330 may select the data transmission power according to the monitoring result.

Specifically, in a case in which the processing module 310 determines that the first node device is located in the overlap region, the determining module 330 may reduce the data transmission power of the data transmission suspended in the monitoring period to a power that exactly does not interfere with access of the node device, located in the overlap region, in the first basic service set to the first access point and data transmission. If the data transmission power is reduced excessively little, the access of the node device, located in the overlap region, in the first basic service set to the first access point and the data transmission are interfered; or if the data transmission power is reduced excessively much, although the access of the node device, located in the overlap region, in the first basic service set to the first access point and the data transmission are not interfered, data transmission power of the second basic service set is reduced excessively much, a data transmission rate is reduced excessively much correspondingly, and a concurrent transmission probability of the first basic service set and the second basic service set is reduced. The concurrent transmission probability refers to a probability of performing data transmission by the first basic service set and the second basic service set simultaneously. Therefore, compared with a general method for blindly adjusting the data transmission power, the power adjustment apparatus 300 according to this embodiment of the present invention adjusts the data transmission power, which balances not interfering with the node device, located in the overlap region, in the first basic service set and the concurrent transmission probability on the basis of exactly not interfering with the access of the node device, located in the overlap region, in the first basic service set to the first access point and the data transmission. That is, on the premise of not interfering with the access of the node device, located in the overlap region, in the first basic service set to the first access point and the data transmission, the data transmission power is kept as high as possible. Correspondingly, in a case in which the processing module 310 determines that the first node device is located in a non-overlap region, the determining module 330 may not adjust the data transmission power of the data transmission suspended in the monitoring period, or the determining module 330 may properly increase the data transmission power of the data transmission suspended in the monitoring period without interfering with the first basic service set.

Case 2: If the data transmission suspended in the monitoring period is the uplink transmission, the second node device may select the data transmission power according to the monitoring result.

Specifically, after the monitoring period ends, the processing module 310 may broadcast, in the second basic service set, the monitoring result and a remaining time length of a transmission period of the data transmission suspended in the monitoring period, to feed back the monitoring result to the second node device. The second node device may adjust the data transmission power thereof in time according to the monitoring result of the monitoring module 320 in the monitoring period and the remaining time length of the transmission period for the data transmission suspended in the monitoring period. In a case in which the processing module 310 determines that the first node device is located in the overlap region, the second node device may reduce the data transmission power thereof to a power that exactly does not interfere with access of the node device, located in the overlap region, in the first basic service set to the first access point and data transmission. If the data transmission power is reduced excessively little, the node device, located in the overlap region, in the first basic service set is interfered; and if the data transmission power is reduced excessively much, although the node device, located in the overlap region, in the first basic service set is not interfered, the data transmission power of the second node device is reduced excessively much, data transmission power of the second basic service set is reduced excessively much, a data transmission rate of the second basic service set is reduced excessively much correspondingly, and a concurrent transmission probability of the first basic service set and the second basic service set is reduced. Compared with a general method for blindly adjusting the data transmission power, the second node device according to this embodiment of the present invention adjusts the data transmission power thereof, which balances not interfering with the node device, located in the overlap region, in the first basic service set and the concurrent transmission probability on the basis of exactly not interfering with the node device, located in the overlap region, in the first basic service set. That is, on the premise of not interfering with the access of the node device, located in the overlap region, in the first basic service set to the first access point and the data transmission, the data transmission power of the second node device is kept as high as possible. In a case in which the processing module 310 determines that the first node device is located in a non-overlap region, the second node device may not adjust the data transmission power thereof, or the second node device may properly increase the data transmission power thereof without interfering with the first basic service set.

Further, after determining the data transmission power between the second node device and the power adjustment apparatus 300, the determining module 330 may further determine a data transmission rate between the second node device and the power adjustment apparatus 300. For a specific example, reference may be made to the related description in step S130 in Embodiment 1 described above.

In a possible implementation manner, the determining module 330 is connected to the monitoring module 320, and is configured to determine, according to a network allocation vector NAV in a duration field in the first beacon frame, a time instant when a next monitoring period starts.

Specifically, the first beacon frame may further include a duration field, and the duration field includes a network allocation vector. The determining module 330 may calculate a wait time according to the NAV, that is, the determining module 330 may determine a time of receiving a first beacon frame next time, i.e. a time instant when a next monitoring period of the monitoring module 320 starts; therefore, the first beacon frame is monitored continually, After the determining module 330 receives the NAV in the monitoring period and determines the time instant when the next monitoring period starts, the power adjustment apparatus 300 may broadcast, in the second basic service set, the time instant when the next monitoring period starts, so that all node devices in the second basic service set may perform avoidance in the next monitoring period to not interfere with monitoring the first beacon frame by the power adjustment apparatus 300. Even if the next monitoring period occurs in a non-data transmission period, it can be ensured that the monitoring module 320 monitors the first beacon frame of the first basic service set effectively.

In the power adjustment apparatus according to this embodiment of the present invention, a processing module determines, according to a data field and an RSSI in a first beacon frame monitored by a monitoring module, whether a first node device is located in an overlap region between a first basic service set and a second basic service set, and if the first node device is located in the overlap region, a determining module determines data transmission power between a second node device and the power adjustment apparatus according to the RSSI, and adjusts data transmission power of the second node device correspondingly; therefore, the second basic service set may not interfere with access of the first node device located in the overlap region to a first access point and data transmission, and a concurrent transmission probability of the first basic service set and the second basic service set is raised.

### Embodiment 4

FIG. 4 is a structural block diagram of a power adjustment apparatus according to Embodiment 4 of the present invention. The power adjustment apparatus 400 according to this embodiment is configured to implement the power adjustment method according to Embodiment 2 shown in FIG. 2a. A component in FIG. 4 having a same sequence number as a component in FIG. 3 has a same function as the component in FIG. 3. For simplicity, detailed descriptions for these components are omitted.

As shown in FIG. 4, the power adjustment apparatus 400 shown in FIG. 4 is different from the power adjustment apparatus 300 shown in FIG. 3 in that, the processing module 410 is further configured to: if the monitoring module 420 does not obtain by means of monitoring the first beacon frame in a previous monitoring period, initiate long monitoring for the first beacon frame after a set time period, and broadcast to each of node devices in the second basic service set that the long monitoring is initiated, to instruct each of the node devices in the second basic service set to suspend requesting to access the power adjustment apparatus 400 of the second basic service set within a time range of the long monitoring.

Specifically, the power adjustment apparatus 400 may suspend data transmission in the monitoring period, to enable the monitoring module 420 to monitor the first beacon frame broadcast by the first basic service set. If the monitoring module 420 does not obtain by means of monitoring the first beacon frame broadcast by the first basic service set in the previous monitoring period, and therefore the processing module 410 cannot determine when to enter into a next monitoring period starts, in this case, the processing module 410 may initiate the long monitoring after a preset time interval T, to actively monitor the first beacon frame broadcast by the first basic service set, and then the processing module enters into a transmission period and a monitoring period again; a circle above is performed constantly. For a specific example, reference may be made to the related description in step 210 in Embodiment 2 described above.

In a possible implementation manner, the processing module 410 is further configured to: in a case in which the monitoring module 420 obtains by means of monitoring that an access saturated degree of the first access point is less than a first threshold, stop monitoring the first beacon frame, and instruct the first access point to reduce a backoff time of a node device, located in the overlap region, in the first basic service set, where the access saturated degree is determined according to a ratio of a time for processing a service by the first access point to a first set time. The backoff time is a time interval from a time instant when an access request sent by a node device in the first basic service set when it is detected that the first access point is idle comes into collision with access requests sent by other node devices in the first basic service set to a time instant the access request is sent again by the node device in the first basic service set. For a specific example, reference may be made to the related description in step S210 in Embodiment 2 described above.

Specifically, when the monitoring module 420 obtains by means of monitoring that the access saturated degree of the first access point is less than the first threshold, an effective monitoring shrink efficiency of the monitoring module 420 is low, and an influence of extending, by the first basic service set, a broadcasting scope for the first beacon frame on the monitoring module 420 is large; and when the monitoring module 420 obtains by means of monitoring that the access saturated degree of the first access point is greater than or equal to the first threshold, the effective monitoring shrink efficiency of the monitoring module 420 is high, and the influence of extending, by the first basic service set, the broadcasting scope for the first beacon frame on the monitoring module 420 is small. Therefore, in a case in which the monitoring module 420 obtains by means of monitoring that the access saturated degree of the first access point is greater than or equal to the first threshold or a quantity of node devices in the overlap region is relatively large, the power adjustment method described in Embodiment 1 of the present invention is employed; and in a case in which the monitoring module 420 obtains by means of monitoring that the access saturated degree of the first access point is less than the first threshold or the quantity of node devices in the overlap region is relatively small, the power adjustment method described in Embodiment 1 is stopped, and the processing module 410 may instruct the first access point to reduce the backoff time of the first node device; therefore, a priority of the first node device is further raised, to improve a probability of access of the first node device to the first access point.

Further, the processing module 410 may instruct the first access point to adjust the backoff time of the first node device, so that the backoff time of the first node device is less than backoff times of other node devices in the first basic service set, or the backoff time of the first node device is less than an average value of backoff times of all node devices in the first basic service set. After previous data transmission of the first access point ends, it is assumed that that the overlap region is not covered by the second basic service set, an access probability that the first node device has a chance to contend for accessing the first access point is raised; correspondingly, it is assumed that the overlap region is covered by the second basic service set, the first node device does not have a chance to contend for accessing the first access point, a node device, located in the non-overlap region, in the first basic service set, waits for a chance to contend for accessing the first access point.

In a possible implementation manner, the processing module 410 is further configured to: if a third node device located in the overlap region exists in the second basic service set and needs to raise a probability of accessing the power adjustment apparatus 400 in the second basic service set, extend a broadcasting scope for sending a second beacon frame, to enable the first access point to monitor a second beacon frame sent by the power adjustment apparatus 400 in the second basic service set, so that the first access point enters into a monitoring period thereof according to the second beacon frame sent by the power adjustment apparatus 400 of the second basic service set, to monitor a second beacon frame sent by the third node device, and determines an upper limit of data transmission power between the first node device and the first access point, where the second beacon frame is a frame in the RTC/CTS protocol format.

Specifically, when both the first basic service set and the second basic service set have node devices located in the overlap region, the first basic service set and the second basic service set need to monitor each other. If the first basic service set has more node devices in the overlap region and the second basic service set has less node devices in the overlap region, monitoring power control by the second basic service set may be power control performed according to the power adjustment method described in step S110 and step S130 in Embodiment 1 described above or according to the power adjustment method described in step S210, FIG. 2a and FIG. 2b in this embodiment. However, because a few of node devices located in the overlap region exist in the second basic service set, in addition to that the power control is performed according to the power adjustment method described in step S110 and step S130 or according to the power adjustment method described in step S210 and FIG. 2a and FIG. 2b, the processing module 410 also needs to extend a broadcasting scope for sending the second beacon frame, to enable the first access point to monitor the second beacon frame sent by the power adjustment apparatus 400 conveniently, so that the first access point determines, according to the second beacon frame sent by the power adjustment apparatus 400, a time instant when a monitoring period thereof starts.

The first access point enters into the monitoring period thereof to monitor the second beacon frame, and if the first access point obtains by means of monitoring the second beacon frame in the monitoring period thereof, the first access point determines, according to a data field in the second beacon frame obtained by means of monitoring, whether the second beacon frame comes from the third node device. In a case in which the second beacon frame comes from the third node device, the first access point determines, according to a received signal strength indicator RSSI in the second beacon frame, whether the third node device is located in the overlap region. In a case in which the third node device is located in the overlap region, the first access point determines an upper limit of data transmission power between the first node device and the first access point according to the RSSI.

Further, if the first access point obtains by means of monitoring the second beacon frame in the monitoring period thereof, the first access point may determine, according to a network allocation vector NAV in a duration field in the second beacon frame, a time instant when a next monitoring period thereof starts.

Further, if the first access point does not obtain by means of monitoring the second beacon frame in a previous monitoring period, the first access point initiates long monitoring for the second beacon frame after a set time period, and broadcasts to each of node devices in the first basic service set that the long monitoring is initiated, to instruct each of the node devices in the first basic service set to suspend requesting to access the first access point within a time range of the long monitoring.

Further, in a case in which the first access point obtains by means of monitoring that an access saturated degree of the power adjustment apparatus 400 is less than a second threshold, the first access point may stop monitoring the second beacon frame, and instruct the power adjustment apparatus 400 to reduce a backoff time of a node device, located in the overlap region, in the second basic service set.

For a specific example, reference may be made to the related description in step S210 in Embodiment 2 described above. With regarding to a bad case in which multiple node devices located in the overlap region exist both in the first basic service set and in the second basic service set, it is suggested that a distance between the first basic service set and the second basic service set is increased, and the area of the overlap region between the first basic service set and the second basic service set is reduced.

In the power adjustment apparatus according to this embodiment of the present invention, if a monitoring module obtains by means of monitoring that a first node device is located in an overlap region, a determining module determines data transmission power between a second node device and a power adjustment apparatus according to an RSSI, and correspondingly adjusts data transmission power of the second node device; a second basic service set may not interfere with access of the first node device located in the overlap region to a first access point and data transmission, thereby raising a concurrent transmission probability of a first basic service set and the second basic service set. If the monitoring module obtains by means of monitoring that an access saturated degree of the first access point is less than a first threshold, a processing module instructs the first access point to reduce a backoff time of the first node device located in the overlap region, thereby improving a probability of the access of the first node device located in the overlap region to the first access point. If a node device located in the overlap region exists in the second basic service set and needs to raise the probability of accessing the power adjustment apparatus, the processing module extends a broadcasting scope for sending a second beacon frame, and the first basic service set and the second basic service set monitor each other, thereby more accurately adjusting the data transmission power of the second node device, and raising the concurrent transmission probability of the first basic service set and the second basic service set.

### Example

FIG. 5 is a structural block diagram of a power adjustment apparatus according to an example. The power adjustment apparatus 500 may be a host server having a computing capability, a personal computer PC, or a portable computer or a terminal. A specific implementation for a computing node is not limited in this example.

The power adjustment apparatus 500 includes a processor (processor) 510, a communications interface (Communications Interface) 520, a memory (memory array) 530 and a bus 540. The processor 510, the communications interface 520 and the memory 530 communicate with each other by using the bus 540.

The communications interface 520 is configured to communicate with a network element, where the network element includes a virtual machine management center, a shared storage and the like.

The processor 510 is configured to execute a program. The processor 510 may be a central processing unit CPU or an application specific integrated circuit (Application Specific Integrated Circuit, ASIC), or one or more integrated circuits configured to implement this example.

The memory 530 is configured to store a file. The memory 530 may include a high-speed RAM memory, or may further include a non-volatile memory (non-volatile memory), for example, at least one magnetic-disk memory. The memory 530 may also be a storage array. The memory 530 may also be divided into blocks, and the blocks may be combined into a virtual volume according to a rule.

In a possible implementation manner, the foregoing program may be a program code including a computer operation instruction. The program is used to:
if a second access point of a second basic service set obtains by means of monitoring a first beacon frame in a monitoring period, determining, by the second access point, according to a received signal strength indicator RSSI and a data field in the first beacon frame, whether a first node device is located in an overlap region between a first basic service set and the second basic service set, where the first node device is a node device that is in the first basic service set and accesses a first access point; and
in a case in which the first node device is located in the overlap region, determining, by the second access point, an upper limit of data transmission power between a second node device and the second access point according to the RSSI, where the second node device is a node device that is in the second basic service set and accesses the second access point.

In a possible implementation manner, the first beacon frame is a frame in a Request to Send/Clear to Send RTS/CTS protocol format, and the determining, by the second access point, according to a received signal strength indicator RSSI and a data field in the first beacon frame, whether a first node device is located in an overlap region between a first basic service set and the second basic service set includes:
determining, by the second access point, according to the data field, whether the first beacon frame comes from the first node device; and
in a case in which the first beacon frame comes from the first node device, determining, by the second access point, according to the RSSI, whether the first node device is located in the overlap region.

In a possible implementation manner, after the second access point in the second basic service set obtains by means of monitoring the first beacon frame in the monitoring period, the method further includes:
determining, by the second access point, according to a network allocation vector NAV in a duration field in the first beacon frame, a time instant when a next monitoring period starts.

In a possible implementation manner, if the second access point does not obtain by means of monitoring the first beacon frame in a previous monitoring period, the method further includes:
initiating, by the second access point, long monitoring for the first beacon frame after a set time period, and broadcast to each of node devices in the second basic service set that the long monitoring is initiated, to instruct each of the node devices in the second basic service set to suspend requesting to access the second access point within a time range of the long monitoring.

In a possible implementation manner, the method further includes:
in a case in which the second access point obtains by means of monitoring that an access saturated degree of the first access point is less than a first threshold, stopping, by the second access point, monitoring the first beacon frame, and instructing the first access point to reduce a backoff time of a node device, located in the overlap region, in the first basic service set, where the access saturated degree is determined according to a ratio of a time for processing a service by the first access point to a first set time.

In a possible implementation manner, the method further includes:
if a third node device located in the overlap region exists in the second basic service set and needs to raise a probability of accessing the second access point, extending, by the second access point, a broadcasting scope for sending a second beacon frame, to enable the first access point to monitor a second beacon frame sent by the second access point, so that the first access point enters into a monitoring period thereof according to the second beacon frame sent by the second access point, to monitor a second beacon frame sent by the third node device, and determines an upper limit of data transmission power between the first node device and the first access point, where
the second beacon frame is a frame in the RTS/CTS protocol format.

In the power adjustment apparatus according to this example, whether a first node device is located in an overlap region between a first basic service set and a second basic service set is determined according to a data field and an RSSI in a first beacon frame, and if the first node device is located in the overlap region, data transmission power between a second node device and the power adjustment apparatus is determined according to the RSSI, and data transmission power of the second node device is adjusted correspondingly; therefore, the second basic service set may not interfere with access of the first node device located in the overlap region to a first access point and data transmission, and a concurrent transmission probability of the first basic service set and the second basic service set is raised.

It can be realized by a person skilled in the art that each of exemplary units and algorithm steps in the embodiments described in the specification can be implemented by electronic hardware, or a combination of computer software or electronic hardware. These functions being implemented by hardware or software depends on characteristic application and a design constraint condition of the technical solution. A person skilled in the art can select different methods according to particular applications to implement the described functions; however, such implementation shall not be considered to exceed the scope of the present invention.

If the functions are implemented in a computer software form, and the computer software is sold or used as an independent product, it can be considered to a certain extent that all or a part (a part contributing to the prior art) of the technical solution of the present invention is embodied by a computer software product. The computer software product is generally stored in a computer readable storage medium, which includes several instructions to enable a computer device (which may be a personal computer, a server, a network device or the like) to execute all or a part of steps of methods of the embodiments of the present invention. The storage medium described above includes various mediums capable of storing program code such as a USB flash disk, a removable hard disk, a read-only memory (English: Read-Only Memory, ROM for short), a random access memory (English: Random Access Memory, RAM for short), a magnetic disk or an optical disc.

The forgoing is only specific implementation manners of the present invention, but the protection scope of the present invention is not limited thereto. Variations or substitutions that can be easily figured out by a person skilled in the art within the technical scope disclosed in the present invention shall fall within the protection scope of the present invention. Therefore, the protection scope of the present invention is subject to the protection scope of the claims.

## Claims

1. A power adjustment apparatus (300, 400), comprising:
a monitoring module (320, 420), configured to monitor a first beacon frame in a monitoring period;
a processing module (310, 410), connected to the monitoring module (320, 420) and configured to: when the monitoring module (320, 420) obtains by means of monitoring the first beacon frame in the monitoring period, determine, according to a received signal strength indicator, RSSI, and a data field in the first beacon frame, whether a first node device is located in an overlap region between a first basic service set and a second basic service set, wherein the first node device is a node device that is in the first basic service set and accesses a first access point; and
a determining module (330, 430), connected to the processing module (310, 410) and configured to: in a case in which the processing module (310, 410) determines that the first node device is located in the overlap region, determine an upper limit of data transmission power between a second node device and the power adjustment apparatus according to the RSSI, wherein the second node device is a node device that is in the second basic service set and accesses the power adjustment apparatus;
wherein the determining module (330, 430) is connected to the monitoring module (320, 420), and is configured to determine, according to a network allocation vector, NAV, in a duration field in the first beacon frame, a time instant when a next monitoring period starts.

2. The power adjustment apparatus (300, 400) according to claim 1, wherein the first beacon frame is a frame in a Request to Send/Clear to Send, RTS/CTS, protocol format, and the processing module (310, 410) is specifically configured to:
determine, according to the data field, whether the first beacon frame comes from the first node device; and
in a case in which the first beacon frame comes from the first node device, determine, according to the RSSI, whether the first node device is located in the overlap region.

3. The power adjustment apparatus (300, 400) according to claim 1, wherein the processing module (310, 410) is further configured to, if the monitoring module (320, 420) does not obtain by means of monitoring the first beacon frame in a previous monitoring period, initiate long monitoring for the first beacon frame after a set time period, and broadcast to each of node devices in the second basic service set that the long monitoring is initiated, to instruct each of the node devices in the second basic service set to suspend requesting to access the power adjustment apparatus of the second basic service set within a time range of the long monitoring.

4. The power adjustment apparatus (300, 400) according to any one of claims 1 to 3, wherein the processing module (310, 410) is further configured to: in a case in which the monitoring module (320, 420) obtains by means of monitoring that an access saturated degree of the first access point is less than a first threshold, stop monitoring the first beacon frame, and instruct the first access point to reduce a backoff time of a node device, located in the overlap region, in the first basic service set, wherein the access saturated degree is determined according to a ratio of a time for processing a service by the first access point to a first set time.

5. A power adjustment method, comprising:
when a second access point of a second basic service set obtains by means of monitoring a first beacon frame in a monitoring period, determining (S110), by the second access point, according to a received signal strength indicator, RSSI, and a data field in the first beacon frame, whether a first node device is located in an overlap region between a first basic service set and the second basic service set, wherein the first node device is a node device that is in the first basic service set and accesses a first access point; and
in a case in which the first node device is located in the overlap region, determining (S130), by the second access point, an upper limit of data transmission power between a second node device and the second access point according to the RSSI, wherein the second node device is a node device that is in the second basic service set and accesses the second access point;
wherein after the second access point in the second basic service set obtains by means of monitoring the first beacon frame in the monitoring period, the method further comprises:
determining, by the second access point, according to a network allocation vector, NAV, in a duration filed in the first beacon frame, a time instant when a next monitoring period starts.

6. The power adjustment method according to claim 5, wherein the first beacon frame is a frame in a Request to Send/Clear to Send, RTS/CTS, protocol format, and the determining (S110), by the second access point, according to a RSSI and a data field in the first beacon frame, whether a first node device is located in an overlap region between a first basic service set and the second basic service set comprises:
determining, by the second access point, according to the data field, whether the first beacon frame comes from the first node device; and
in a case in which the first beacon frame comes from the first node device, determining, by the second access point, according to the RSSI, whether the first node device is located in the overlap region.

7. The power adjustment method according to claim 5, wherein if the second access point does not obtain by means of monitoring the first beacon frame in a previous monitoring period, the method further comprises:
Initiating (S210), by the second access point, long monitoring for the first beacon frame after a set time period, and broadcasting to each of node devices in the second basic service set that the long monitoring is initiated, to instruct each of the node devices in the second basic service set to suspend requesting to access the second access point within a time range of the long monitoring.

8. The power adjustment method according to any one of claims 5 to 7, further comprising:
in a case in which the second access point obtains by means of monitoring that an access saturated degree of the first access point is less than a first threshold, stopping, by the second access point, monitoring the first beacon frame, and instructing the first access point to reduce a backoff time of a node device, located in the overlap region, in the first basic service set, wherein the access saturated degree is determined according to a ratio of a time for processing a service by the first access point to a first set time.

## Patentansprüche

1. Leistungsanpassungsvorrichtung (300, 400), aufweisend:
ein Überwachungsmodul (320, 420), das konfiguriert ist, einen ersten Beacon-Frame in einem Überwachungszeitraum zu überwachen;
ein Verarbeitungsmodul (310, 410), das mit dem Überwachungsmodul (320, 420) verbunden und konfiguriert ist: wenn das Überwachungsmodul (320, 420) mittels Überwachen den ersten Beacon-Frame in dem Überwachungszeitraum erlangt, gemäß einem Signalstärkenindikator des empfangenen Signals RSSI und einem Datenfeld in dem ersten Beacon-Frame, zu bestimmen, ob sich eine erste Knotenvorrichtung in einer Überlappungsregion zwischen einem ersten Basisdienstsatz und einem zweiten Basisdienstsatz befindet, wobei die erste Knotenvorrichtung eine Knotenvorrichtung ist, die sich im ersten Basisdienstsatz befindet und auf einen ersten Zugriffspunkt zugreift; und
ein Bestimmungsmodul (330, 430), das mit dem Verarbeitungsmodul (310, 410) verbunden und konfiguriert ist: in einem Fall, in dem das Verarbeitungsmodul (310, 410) bestimmt, dass sich die erste Knotenvorrichtung in der Überlappungsregion befindet, eine Obergrenze der Datenübertragungsleistung zwischen einer zweiten Knotenvorrichtung und der Leistungsanpassungsvorrichtung gemäß dem RSSI zu bestimmen, wobei die zweite Knotenvorrichtung eine Knotenvorrichtung ist, die sich im zweiten Basisdienstsatz befindet und die auf die Leistungsanpassungsvorrichtung zugreift;
wobei das Bestimmungsmodul (330, 430) mit dem Überwachungsmodul (320, 420) verbunden und konfiguriert ist, gemäß einem Netzwerkzuordnungsvektor NAV in einem Dauerfeld in dem ersten Beacon-Frame einen Moment zu bestimmen, zu dem ein nächster Überwachungszeitraum startet.

2. Leistungsanpassungsvorrichtung (300, 400) nach Anspruch 1, wobei der erste Beacon-Frame ein Frame in einem Sendeanfrage/Sendebereitschaft-, RTS/CTS, -Protokollformat ist und das Verarbeitungsmodul (310, 410) speziell konfiguriert ist zum:
Bestimmen, gemäß dem Datenfeld, ob der erste Beacon-Frame von der ersten Knotenvorrichtung kommt; und
in einem Fall, in dem der erste Beacon-Frame von der ersten Knotenvorrichtung kommt, Bestimmen, gemäß dem RSSI, ob sich die erste Knotenvorrichtung in der Überlappungsregion befindet.

3. Leistungsanpassungsvorrichtung (300, 400) nach Anspruch 1, wobei das Verarbeitungsmodul (310, 410) ferner konfiguriert ist, wenn das Überwachungsmodul (320, 420) nicht mittels Überwachen den ersten Beacon-Frame in einem vorhergehenden Überwachungszeitraum erlangt, ein langes Überwachen für den ersten Beacon-Frame nach einem festgelegten Zeitraum zu initiieren und jeder der Knotenvorrichtungen in dem zweiten Basisdienstsatz zu senden, dass das lange Überwachen initiiert ist, um jede der Knotenvorrichtungen in dem zweiten Basisdienstsatz anzuweisen, das Anfordern, auf die Leistungsanpassungsvorrichtung des zweiten Basisdienstsatzes innerhalb eines Zeitbereichs des langen Überwachens zuzugreifen, auszusetzen.

4. Leistungsanpassungsvorrichtung (300, 400) nach einem der Ansprüche 1 bis 3, wobei das Verarbeitungsmodul (310, 410) ferner konfiguriert ist: in einem Fall, in dem das Überwachungsmodul (320, 420) mittels Überwachen erlangt, dass ein Zugriffssättigungsgrad des ersten Zugriffspunkts kleiner als ein erster Schwellenwert ist, das Überwachen des ersten Beacon-Frames zu stoppen und den ersten Zugriffspunkt anzuweisen, eine Verzichtszeit einer Knotenvorrichtung, die sich in der Überlappungsregion befindet, in dem ersten Basisdienstsatz zu reduzieren, wobei der Zugriffssättigungsgrad gemäß einem Verhältnis einer Zeit zum Verarbeiten eines Dienstes durch den ersten Zugriffspunkt zu einer ersten festgelegten Zeit bestimmt wird.

5. Leistungsanpassungsverfahren, aufweisend:
wenn ein zweiter Zugriffspunkt eines zweiten Basisdienstsatzes mittels Überwachen einen ersten Beacon-Frame in einem Überwachungszeitraum erlangt, Bestimmen (S110), durch den zweiten Zugriffspunkt, gemäß einem Signalstärkenindikator des empfangenen Signals RSSI und einem Datenfeld in dem ersten Beacon-Frame, ob sich eine erste Knotenvorrichtung in einer Überlappungsregion zwischen einem ersten Basisdienstsatz und dem zweiten Basisdienstsatz befindet, wobei die erste Knotenvorrichtung eine Knotenvorrichtung ist, die sich in dem ersten Basisdienstsatz befindet und auf einen ersten Zugriffspunkt zugreift; und
in einem Fall, in dem sich die erste Knotenvorrichtung in der Überlappungsregion befindet, Bestimmen (S130), durch den zweiten Zugriffspunkt, einer Obergrenze der Datenübertragungsleistung zwischen einer zweiten Knotenvorrichtung und dem zweiten Zugriffspunkt gemäß dem RSSI, wobei die zweite Knotenvorrichtung eine Knotenvorrichtung ist, die sich in dem zweiten Basisdienstsatz befindet und auf den zweiten Zugriffspunkt zugreift;
wobei, nachdem der zweite Zugriffspunkt in dem zweiten Basisdienstsatz mittels Überwachen den ersten Beacon-Frame in dem Überwachungszeitraum erlangt, das Verfahren ferner aufweist:
Bestimmen, durch den zweiten Zugriffspunkt, gemäß einem Netzwerkzuordnungsvektor NAV in einer Zeitdauer, die in dem ersten Beacon-Frame abgelegt ist, einen Moment, zu dem ein nächster Überwachungszeitraum startet.

6. Leistungsanpassungsverfahren nach Anspruch 5, wobei der erste Beacon-Frame ein Frame in einem Sendeanfrage/Sendebereitschaft-, RTS/CTS, -Protokollformat ist und das Bestimmen (S110), durch den zweiten Zugriffspunkt, gemäß einem RSSI und einem Datenfeld in dem ersten Beacon-Frame, ob sich eine erste Knotenvorrichtung in einer Überlappungsregion zwischen einem ersten Basisdienstsatz und dem zweiten Basisdienstsatz befindet, aufweist:
Bestimmen, durch den zweiten Zugriffspunkt, gemäß dem Datenfeld, ob der erste Beacon-Frame von der ersten Knotenvorrichtung kommt; und
in einem Fall, in dem der erste Beacon-Frame von der ersten Knotenvorrichtung kommt, Bestimmen, durch den zweiten Zugriffspunkt gemäß dem RSSI, ob sich die erste Knotenvorrichtung in der Überlappungsregion befindet.

7. Leistungsanpassungsverfahren nach Anspruch 5, wobei, wenn der zweite Zugriffspunkt nicht mittels Überwachen den ersten Beacon-Frame in einem vorhergehenden Überwachungszeitraum erlangt, das Verfahren ferner aufweist:
Initiieren (S210), durch den zweiten Zugriffspunkt, von langem Überwachen für den ersten Beacon-Frame, nach einem festgelegten Zeitraum, und Senden zu jeder Knotenvorrichtung in dem zweiten Basisdienstsatz, dass das lange Überwachen initiiert ist, um jede von den Knotenvorrichtungen in dem zweiten Basisdienstsatz anzuweisen, das Anfordern, auf den zweiten Zugriffspunkt innerhalb eines Zeitbereichs des langen Überwachens zuzugreifen, auszusetzen.

8. Leistungsanpassungsverfahren nach einem der Ansprüche 5 bis 7, ferner; aufweisend:
in einem Fall, in dem der zweite Zugriffspunkt mittels Überwachen erlangt, dass ein Zugriffssättigungsgrad des ersten Zugriffspunkts kleiner als ein erster Schwellenwert ist, Stoppen, durch den zweiten Zugriffspunkt, des Überwachens des ersten Beacon-Frames und Anweisen des ersten Zugriffspunkts, eine Verzichtszeit einer Knotenvorrichtung, die sich in der Überlappungsregion befindet, in dem ersten Basisdienstsatz zu reduzieren, wobei der Zugriffssättigungsgrad gemäß einem Verhältnis einer Zeit zum Verarbeiten eines Dienstes durch den ersten Zugriffspunkt zu einer ersten festgelegten Zeit bestimmt wird.

## Revendications

1. Appareil de réglage de puissance (300, 400) comprenant :
un module de surveillance (320, 420), configuré pour surveiller une première trame de balise pendant une période de surveillance ;
un module de traitement (310, 410), raccordé au module de surveillance (320, 420) et configuré : lorsque le module de surveillance (320, 420) obtient, par une surveillance, la première trame de balise pendant la période de surveillance, pour déterminer, en fonction d'un indicateur d'intensité du signal reçu (RSSI) et d'un champ de données dans la première trame de balise, si un premier dispositif de noeud est situé dans une région de chevauchement entre un premier ensemble de services de base et un second ensemble de services de base, dans lequel le premier dispositif de noeud est un dispositif de noeud qui se trouve dans le premier ensemble de services de base et a accès à un premier point d'accès ; et
un module de détermination (330, 430), raccordé au module de traitement (310, 410) et configuré : dans le cas où le module de traitement (310,410) détermine que le premier dispositif de noeud est situé dans la région de chevauchement, pour déterminer une limite supérieure de la puissance de transmission de données entre un second dispositif de noeud et l'appareil de réglage de puissance en fonction de l'indicateur RSSI, dans lequel le second dispositif de noeud est un dispositif de noeud qui se trouve dans le second ensemble de services de base et a accès à l'appareil de réglage de puissance ;
dans lequel le module de détermination (330, 430) est raccordé au module de surveillance (320, 420) et est configuré pour déterminer, en fonction d'un vecteur d'attribution de réseau (NAV) dans un champ de durée dans la première trame de balise, un instant où une prochaine période de surveillance commence.

2. Appareil de réglage de puissance (300, 400) selon la revendication 1, dans lequel la première trame de balise est une trame dans un format de protocole de demande à envoyer/prêt à envoyer (RTS/CTS) et le module de traitement (310, 410) est spécialement configuré :
pour déterminer, en fonction du champ de données, si la première trame de balise provient du premier dispositif de noeud ; et
dans le cas où la première trame de balise provient du premier dispositif de noeud, pour déterminer, en fonction de l'indicateur RSSI, si le premier dispositif de noeud est situé dans la région de chevauchement.

3. Appareil de réglage de puissance (300, 400) selon la revendication 1, dans lequel le module de traitement (310, 410) est en outre configuré : si le module de surveillance (320, 420) n'obtient pas, par une surveillance, la première trame de balise pendant une précédente période de surveillance, pour déclencher une longue surveillance de la première trame de balise après une période de temps définie et pour diffuser à chacun des dispositifs de noeud dans le second ensemble de services de base que la longue surveillance est déclenchée, pour donner comme instruction à chacun des dispositifs de noeud dans le second ensemble de services de base de suspendre la demande d'accès à l'appareil de réglage de puissance du second ensemble de services de base pendant une plage de temps de la longue surveillance.

4. Appareil de réglage de puissance (300, 400) selon l'une quelconque des revendications 1 à 3, dans lequel le module de traitement (310, 410) est en outre configuré : dans le cas où le module de surveillance (320, 420) obtient par une surveillance qu'un degré saturé d'accès du premier point d'accès soit inférieur à un premier seuil, pour arrêter la surveillance de la première trame de balise et pour donner comme instruction au premier point d'accès de réduire un temps de réduction de puissance d'un dispositif de noeud, situé dans la région de chevauchement, dans le premier ensemble de services de base, dans lequel le degré saturé d'accès est déterminé en fonction d'un rapport entre un moment pour traiter un service au moyen du premier point d'accès et un premier moment défini.

5. Procédé de réglage de puissance consistant :
lorsqu'un second point d'accès d'un second ensemble de services de base obtient, par une surveillance, une première trame de balise pendant une période de surveillance, à déterminer (S110), au moyen du second point d'accès, en fonction d'un indicateur d'intensité du signal reçu (RSSI) et d'un champ de données dans la première trame de balise, si un premier dispositif de noeud est situé dans une région de chevauchement entre un premier ensemble de services de base et le second ensemble de services de base, dans lequel le premier dispositif de noeud est un dispositif de noeud qui se trouve dans le premier ensemble de services de base et a accès au premier point d'accès ; et
dans le cas où le premier dispositif de noeud est situé dans la région de chevauchement, à déterminer (S130), au moyen du second point d'accès, une limite supérieure de la puissance de transmission de données entre un second dispositif de noeud et le second point d'accès en fonction de l'indicateur RSSI, dans lequel le second dispositif de noeud est un dispositif de noeud qui se trouve dans le second ensemble de services de base et a accès au second point d'accès ;
dans lequel, après que le second point d'accès dans le second ensemble de services de base obtient, par une surveillance, la première trame de base pendant la période de surveillance, le procédé consiste en outre :
à déterminer, au moyen du second point d'accès, en fonction d'un vecteur d'attribution de réseau (NAV) dans un champ de durée dans la première trame de balise, un instant où une prochaine période de surveillance commence.

6. Procédé de réglage de puissance selon la revendication 5, dans lequel la première trame de balise est une trame dans un format de protocole de demande à envoyer/prêt à envoyer (RTS/CTS) et la détermination (SI 10), au moyen du second point d'accès, en fonction d'un indicateur RSSI et d'un champ de données dans la première trame de balise, qu'un premier dispositif de noeud est situé dans une région de chevauchement entre un premier ensemble de services de base et le second ensemble de services de base consiste :
à déterminer, au moyen du second point d'accès, en fonction du champ de données, si la première trame de balise provient du premier dispositif de noeud ; et
dans le cas où la première trame de balise provient du premier dispositif de noeud, à déterminer, au moyen du second point d'accès, en fonction de l'indicateur RSSI, si le premier dispositif de noeud est situé dans la région de chevauchement.

7. Procédé de réglage de puissance selon la revendication 5, dans lequel, si le second point d'accès n'obtient pas, par une surveillance, la première trame de balise pendant une précédente période de surveillance, le procédé consiste en outre :
à déclencher (S210), au moyen du second point d'accès, une longue surveillance de la première trame de balise après une période de temps définie et à diffuser à chacun des dispositifs de noeud dans le second ensemble de services de base que la longue surveillance est déclenchée, pour donner comme instruction à chacun des dispositifs de noeud dans le second ensemble de services de base de suspendre la demande d'accès au second point d'accès pendant une plage de temps de la longue surveillance.

8. Procédé de réglage de puissance selon l'une quelconque des revendications 5 à 7, consistant en outre :
dans le cas où le second point d'accès obtient par une surveillance qu'un degré saturé d'accès du premier point d'accès est inférieur à un premier seuil, à arrêter, au moyen du second point d'accès, la surveillance de la première trame de balise et à donner comme instruction au premier point d'accès de réduire un temps de réduction de puissance d'un dispositif de noeud, situé dans la région de chevauchement, dans le premier ensemble de services de base, dans lequel le degré saturé d'accès est déterminé en fonction d'un rapport entre un moment pour traiter un service au moyen du premier point d'accès et un premier moment défini.
